# EUROPEAN PATENT SPECIFICATION

(11) **EP 3 630 449 B1**
(45) Date of publication and mention of the grant of the patent: **16.10.2024**
(21) Application number: 18805174.2
(22) Date of filing: 21.05.2018
(51) Int. Cl.: B29C 55/14, B32B 27/08, B32B 27/16, B32B 27/18, B32B 27/32

(54) **METALLIZED, ORIENTED AND THIN LLDPE FILMS**
METALLISIERTE AUSGERICHTETE UND DÜNNE LLDPE-SCHICHTEN
FILMS LLDPE MÉTALLISÉS, ORIENTÉS ET MINCES

(30) Priority: 23.05.2017 US 201762509784 P
(43) Date of publication of application: 08.04.2020
(73) Proprietor: Jindal Innovation Center SRL, 6761 Virton (BE)
(72) Inventor: AMBROISE, Benoît, 6717 Nobressart (BE)
(74) Representative: Hindles Limited
(86) International application number: PCT/US2018/033756
(87) International publication number: WO 2018/217673

(56) References cited:
- EP-A1- 3 368 308
- WO-A1-2017/005553
- WO-A1-97/22470
- US-A1- 2002 031 651
- US-A1- 2004 053 066
- US-A1- 2004 105 994
- US-A1- 2007 224 376
- US-A1- 2008 248 228
- US-A1- 2009 110 888
- US-A1- 2012 263 960
- US-A1- 2012 263 960
- US-A1- 2015 298 861
- US-B1- 6 495 266

## Description

### REFERENCE TO RELATED APPLICATIONS

This application is a Patent Cooperation Treaty application, which claims priority to United States provisional patent application serial number 62/509,784 filed on 23 May 2017.

### FIELD

This disclosure relates to compositions, structures, and methods for metallized, oriented, multilayer, linear, low-density polyethylene ("LLDPE") films that include both barrier protection and enhanced sealing properties in packaging, wrapping and labeling applications at a reduced thickness as compared to the present state of the art.

### BACKGROUND

Polyethylene films are broadly used as sealants in packaging. Un-oriented films generally have mediocre physical properties and need to be combined to other webs such as paper, PET, BOPP, and so forth in order to provide mechanical strength, or such as metallized PET, metallized BOPP, Nylon or aluminum foil in order to provide barrier protection. Furthermore, traditional cast or blown polyethylene sealant films are typically not metallized since metal adhesion does not adhere well enough to maintain integrity when laminated to a stiff web. US 2004/0053066 A1 discloses an oriented multilayer film containing a core layer and a first skin layer, wherein the first skin layer includes a metallocene-catalyzed propylene homopolymer or copolymer, and the first skin layer is metallized. US 2002/0031651 A1 discloses a multilayer film structure comprising a polyolefin substrate having a first and second side, a metal layer adjacent to the first side and a coating layer adjacent to the metal layer. US 2008/0248228A1 discloses a package made from a gas permeable, non-perforated polyethylene film. The film is made from a blend of a linear low-density polyethylene and a high-pressure low-density polyethylene. US 2009/0110888 A1 discloses a flexible packaging web comprising a non-oriented sealant film, which comprises a thermoplastic base layer, a metal coating deposited on the base layer and a heat-sealing layer.

What is needed, however, are new multilayer films that have barrier protection with enhanced sealing properties to packages at reduced thickness. The advantage for the customer is a reduced amount of packaging at same performances. Furthermore, what is needed are new multilayer films that withstand metallization and provide good metal adhesion and metallized barrier properties.

### SUMMARY

This disclosure provides compositions and methods for an oriented film that may include a core layer consisting of biaxially oriented linear low-density polyethylene and optionally additives, wherein the core layer has a first side and a second side. Further, the film includes a first sealant layer consisting of biaxially oriented linear low-density polyethylene, and optionally additives, on the first side, and a second sealant layer consisting of biaxially oriented linear low-density polyethylene, and optionally additives, on the secondside, wherein the linear low-density polyethylenes in each of the film's layers may be of more than one type/grade, have the same or different densities, or both. Further still, the film is 30 µm or less in thickness, has a water-vapor transmission rate of ≤ 1 g/m²/d at 38°C and 90% relative humidity, and has an oxygen transmission rate of ≤ 100 cm³/m²/d at 23°C and 0% relative humidity, and the linear low-density polyethylene in the core layer, the first sealant layer, the second sealant layer, or combinations thereof is one or more grades of maleic-anhydride-grafted polyethylenes, acrylic-acid copolymers, or combinations thereof.

### DETAILED DESCRIPTION

Generally, disclosed are metallized, oriented, multilayer, linear, low-density polyethylene ("LLDPE") films that include both barrier protection and enhanced sealing properties in packaging, wrapping and labeling applications at a reduced thickness as compared to the present state of the art. An advantage for the end-user of such films is a reduced amount of material while still providing the same, similar or even better performances as compared to thicker films in the present state of the art.

Below, directional terms, such as "above," "below," "upper," "lower," "front," "back," "top," "bottom," etc., are used for convenience in referring to the accompanying drawings. In general, "above," "upper," "upward," "top," and similar terms refer to a direction away the earth's surface, and "below," "lower," "downward," "bottom," and similar terms refer to a direction toward the earth's surface, but is meant for illustrative purposes only, and the terms are not meant to limit the disclosure.

Various specific embodiments, versions and examples are described now, including exemplary embodiments and definitions that are adopted herein for purposes of understanding. While the following detailed description gives specific preferred embodiments, those skilled in the art will appreciate that these embodiments are exemplary only, and that the disclosure can be practiced in other ways. For purposes of determining infringement, the scope of the invention will refer to the any claims, including their equivalents, and elements or limitations that are equivalent to those that are recited.

As used herein, "polymer" may be used to refer to homopolymers, copolymers, interpolymers, terpolymers, etc. Likewise, a "copolymer" may refer to a polymer comprising two monomers or to a polymer comprising three or more monomers.

As used herein, "intermediate" is defined as the position of one layer of a multilayered film, wherein said layer lies between two other identified layers. In some embodiments, the intermediate layer may be in direct contact with either or both of the two identified layers. In other embodiments, additional layers may also be present between the intermediate layer and either or both of the two identified layers.

As used herein, "elastomer" is defined as a propylene-based or ethylene-based copolymer that can be extended or stretched with force to at least 100% of its original length, and upon removal of the force, rapidly (e.g., within 5 seconds) returns to its original dimensions.

As used herein, "plastomer" is defined as a propylene-based or ethylene-based copolymer having a density in the range of 0.850 g/cm3 to 0.920 g/cm3 and a DSC melting point of at least 40 °C.

As used herein, "substantially free" is defined to mean that the referenced film layer is largely, but not wholly, absent a particular component. In some embodiments, small amounts of the component may be present within the referenced layer as a result of standard manufacturing methods, including recycling of film scraps and edge trim during processing.

### Core Layer

As is known to those skilled in the art, the core layer of a multilayered film is most commonly the thickest layer and provides the foundation of the multilayered structure. In some embodiments, the core layer comprises, consists essentially of, or consists of biaxially oriented polyethylene ("BOPE"). In alternative embodiments, the core layer may further comprise, consist essentially of, or consist of biaxially oriented polypropylene ("BOPP"), biaxially oriented polyester ("BOPET"), biaxially oriented polylactic acid ("BOPLA"), and combinations thereof. In still alternate embodiments the core layer may also contain lesser amounts of additional polymer(s) selected from the group consisting of ethylene polymer, ethylene-propylene copolymers, ethylene-propylene-butene terpolymers, elastomers, plastomers, different types of metallocene-LLDPEs (m-LLDPEs), and combinations thereof.

The core layer may further comprise, consist essentially of, or consist of a hydrocarbon resin. Hydrocarbon resins may serve to enhance or modify the flexural modulus, improve processability, or improve the barrier properties of the film. The resin may be a low molecular weight hydrocarbon that is compatible with the core polymer. Optionally, the resin may be hydrogenated. The resin may have a number average molecular weight less than 5000, preferably less than 2000, most preferably in the range of from 500 to 1000. The resin can be natural or synthetic and may have a softening point in the range of from 60 °C to 180 °C.

Suitable hydrocarbon resins include, but are not limited to petroleum resins, terpene resins, styrene resins, and cyclopentadiene resins. In some embodiments, the hydrocarbon resin is selected from the group consisting of aliphatic hydrocarbon resins, hydrogenated aliphatic hydrocarbon resins, aliphatic/aromatic hydrocarbon resins, hydrogenated aliphatic aromatic hydrocarbon resins, cycloaliphatic hydrocarbon resins, hydrogenated cycloaliphatic resins, cycloaliphatic/aromatic hydrocarbon resins, hydrogenated cycloaliphatic/aromatic hydrocarbon resins, hydrogenated aromatic hydrocarbon resins, polyterpene resins, terpene-phenol resins, rosins and rosin esters, hydrogenated rosins and rosin esters, and combinations thereof.

The amount of such hydrocarbon resins, either alone or in combination, in the core layer is preferably less than 20 wt %, more preferably in the range of from 1 wt % to 5 wt %, based on the total weight of the core layer.

The core layer may further comprise one or more additives such as opacifying agents, pigments, colorants, cavitating agents, slip agents, antioxidants, anti-fog agents, anti-static agents, fillers, moisture barrier additives, gas barrier additives, and combinations thereof, as discussed in further detail below. A suitable anti-static agent is ARMOSTAT^{™} 475 (commercially available from Akzo Nobel of Chicago, Ill.).

Cavitating agents may be present in the core layer in an amount less than 30 wt %, preferably less than 20 wt %, most preferably in the range of from 2 wt % to 10 wt %, based on the total weight of the core layer.

Preferably, the total amount of additives in the core layer comprises up to about 20 wt % of the core layer, but some embodiments may comprise additives in the core layer in an amount up to about 30 wt % of the core layer.

The core layer preferably has a thickness in the range of from about 5 µm to 100 µm, more preferably from about 5 µm to 50 µm, most preferably from 5µm to 25 µm.

### Tie Layer(s)

Tie layer(s) of a multilayered film is typically used to connect two other layers of the multilayered film structure, e.g., a core layer and a sealant layer, and is positioned intermediate these other layers. The tie layer(s) may have the same or a different composition as compared to the core layer.

In some embodiments, the tie layer is in direct contact with the surface of the core layer. In other embodiments, another layer or layers may be intermediate the core layer and the tie layer. The tie layer may comprise, consist essentially of, or consists of one or more polymers. In addition, the polymers may include C₂ polymers, maleic-anhydride-modified polyethylene polymers, C₃ polymers, C₂C₃ random copolymers, C₂C₃C₄ random terpolymers, heterophasic random copolymers, C₄ homopolymers, C₄ copolymers, metallocene polymers, propylene-based or ethylene-based elastomers and/or plastomers, ethyl-methyl acrylate (EMA) polymers, ethylene-vinyl acetate (EVA) polymers, polar copolymers, and combinations thereof. For example, one polymer may be a grade of VISTAMAXX^{™} polymer (commercially available from ExxonMobil Chemical Company of Baytown, Tex.), such as VM6100 and VM3000 grades. Alternatively, suitable polymers may include VERSIFY^{™} polymer (commercially available from The Dow Chemical Company of Midland, Mich.), Basell CATALLOY^{™} resins such as ADFLEX^{™} T100F, SOFTELL^{™} Q020F, CLYRELL^{™} SM1340 (commercially available from Basell Polyolefins of The Netherlands), PB (propylene-butene-1) random copolymers, such as Basell PB 8340 (commercially available from Basell Polyolefins of The Netherlands), Borealis BORSOFT^{™} SD233CF, (commercially available from Borealis of Denmark), EXCEED^{™} 1012CA and 1018CA metallocene polyethylenes, EXACT^{™} 5361, 4049, 5371, 8201, 4150, 3132 polyethylene plastomers, EMCC 3022.32 low density polyethylene (LDPE) (commercially available from ExxonMobil Chemical Company of Baytown, Tex.).

In some embodiments, the tie layer may further comprise one or more additives such as opacifying agents, pigments, colorants, cavitating agents, slip agents, antioxidants, anti-fog agents, anti-static agents, anti-block agents, fillers, moisture barrier additives, gas barrier additives, and combinations thereof, as discussed in further detail below.

The thickness of the tie layer is typically in the range of from about 0.50 to 25 µm, preferably from about 0.50 µm to 12 µm, more preferably from about 0.50 µm to 6 µm, and most preferably from about 2.5 µm to 5 µm. However, in some thinner films, the tie layer thickness may be from about 0.5 µm to 4 µm, or from about 0.5 µm to 2 µm, or from about 0.5 µm to 1.5 µm.

### Sealant Layer

In some embodiments, the sealant layer(s) is contiguous to the core layer. Furthermore, the sealant layer is on both sides of the core layer. In addition, the sealant layer may have the same or different composition as compared to the core. In still other embodiments, one or more other layers may be intermediate the core layer and the sealant layer. The sealant layer may comprise, consist essentially of, or consist of a polymer that is suitable for heat-sealing or bonding to itself when crimped between heated crimp-sealer jaws. Suitable sealant layers comprise, consist essentially of, or consist of one or more polymers, including homopolymers, copolymers of ethylene, propylene, butene, hexene, heptene, octene, and combinations thereof. Additionally and alternatively, the suitable sealant layer composition has a melting peak equal to or less than the melting peak of the core layer. More particularly, the sealant layer may comprise, consist essentially of, or consists of at least one polymer selected from the group consisting of ethylenepropylene-butylene (EPB) terpolymer, ethylene vinyl acetate (EVA), metallocene-catalyzed ethylene, LLDPE, ionomer, polyethylene elastomer, plastomer, and combinations thereof.

The sealant layer(s) may also comprise processing aid additives, such as anti-block agents, anti-static agents, slip agents and combinations thereof, as discussed in further detail below.

The thickness of each sealant layer is typically in the range of from about 0.10 µm to 7.0 µm, preferably about 0.10 µm to 4 µm, and most preferably about 1 µm to 3 µm. In some film embodiments, the sealant layer thickness may be from about 0.10 µm to 2 µm, 0.10 µm to 1 µm, or 0.10 µm to 0.50 µm. In some commonly preferred film embodiments, the sealant layer 20 has a thickness in the range of from about 0.5 µm to 2 µm, 0.5 µm to 3 µm, or 1 µm to 3.5 µm.

### Skin Layer(s), Including Metallizable Skin Layers

In some embodiments, the skin layer comprises, consists essentially of, or consists of at least one polymer selected from the group comprising, consisting essentially of, and/or consisting of one or more acid-containing polyethylene copolymer or terpolymer, which may be grafted or copolymerized. The acid-containing portion, itself, may be acrylic-acid based, methacrylic-acid based, another organic acid, or combinations thereof. The acid-containing portion of the acid-containing polymer may be from 4 wt% through 20 wt%, or 6 wt% through 16 wt%, or 8 wt% through 12 wt%. As examples, Exxon Mobil Escor EAA resins or Dupont Nucrel EAA resins or Dow Primacor EAA resins might be used. For metallizing or barrier properties, the acid-modified skin layer may contain LLDPE or ethylene vinyl alcohol based polymer(s) ("EVOH"), a suitable EVOH copolymer is EVAL^{™} G176B or XEP 1300 (commercially available from Kuraray Company Ltd. of Japan).

The skin layer may also comprise processing aid additives, such as anti-block agents, anti-static agents, slip agents and combinations thereof, as discussed in further detail below.

The thickness of the skin layer depends upon the intended function of the skin layer, but is typically in the range of from about 0.20 µm through 3.5 µm, or from 0.30 µm through 2 µm, or in many embodiments, from 0.50 µm through 1.0 µm. In thin film embodiments, the skin layer thickness may range from about 0.20 µm through 1.5 µm, or 0.50 µm through 1.0 µm.

### Additives

Additives present in the film's layer(s) may include, but are not limited to opacifying agents, pigments, colorants, cavitating agents, slip agents, antioxidants, anti-fog agents, anti-static agents, anti-block agents, fillers, moisture barrier additives, gas barrier additives, gas scavengers, and combinations thereof. Such additives may be used in effective amounts, which vary depending upon the property required.

Examples of suitable opacifying agents, pigments or colorants are iron oxide, carbon black, aluminum, titanium dioxide (TiO₂), calcium carbonate (CaCO₃), and combinations thereof.

Cavitating or void-initiating additives may include any suitable organic or inorganic material that is incompatible with the polymer material(s) of the layer(s) to which it is added, at the temperature of biaxial orientation, in order to create an opaque film. Examples of suitable void-initiating particles are PBT, nylon, solid or hollow pre-formed glass spheres, metal beads or spheres, ceramic spheres, calcium carbonate, talc, chalk, or combinations thereof. The average diameter of the void-initiating particles typically may be from about 0.1 to 10 µm.

Slip agents may include higher aliphatic acid amides, higher aliphatic acid esters, waxes, silicone oils, and metal soaps. Such slip agents may be used in amounts ranging from 0.1 wt % to 2 wt % based on the total weight of the layer to which it is added. An example of a slip additive that may be useful is erucamide.

Non-migratory slip agents, used in one or more skin layers of the multilayered films, may comprise, consist essentially of, or consist of polymethyl methacrylate (PMMA). The non-migratory slip agent may have a mean particle size in the range of from about 0.5 µm to 8 µm, or 1 µm to 5 µm, or 2 µm to 4 µm, depending upon layer thickness and desired slip properties. Alternatively, the size of the particles in the non-migratory slip agent, such as PMMA, may be greater than 20% of the thickness of the skin layer containing the slip agent, or greater than 40% of the thickness of the skin layer, or greater than 50% of the thickness of the skin layer. The size of the particles of such non-migratory slip agent may also be at least 10% greater than the thickness of the skin layer, or at least 20% greater than the thickness of the skin layer, or at least 40% greater than the thickness of the skin layer. Generally spherical, particulate non-migratory slip agents are contemplated, including PMMA resins, such as EPOSTAR^{™} (commercially available from Nippon Shokubai Co., Ltd. of Japan). Other commercial sources of suitable materials are also known to exist. Non-migratory means that these particulates do not generally change location throughout the layers of the film in the manner of the migratory slip agents. A conventional polydialkyl siloxane, such as silicone oil or gum additive having a viscosity of 10,000 to 2,000,000 centistokes is also contemplated.

Suitable anti-oxidants may comprise, consist essentially of, or consist of phenolic anti-oxidants, such as IRGANOX^{®} 1010 (commercially available from Ciba-Geigy Company of Switzerland). Such an anti-oxidant is generally used in amounts ranging from 0.1 wt % to 2 wt %, based on the total weight of the layer(s) to which it is added.

Anti-static agents may comprise, consist essentially of, or consist of alkali metal sulfonates, polyether-modified polydiorganosiloxanes, polyalkylphenylsiloxanes, and tertiary amines. Such anti-static agents may be used in amounts ranging from about 0.05 wt % to 3 wt %, based upon the total weight of the layer(s).

Examples of suitable anti-blocking agents may comprise, consist essentially of, or consist of silica-based products such as SYLOBLOC^{®} 44 (commercially available from Grace Davison Products of Colombia, Md.), PMMA particles such as EPOSTAR^{™} (commercially available from Nippon Shokubai Co., Ltd. of Japan), or polysiloxanes such as TOSPEARL^{™} (commercially available from GE Bayer Silicones of Wilton, Conn.). Such an anti-blocking agent comprises an effective amount up to about 3000 ppm of the weight of the layer(s) to which it is added.

Useful fillers may comprise, consist essentially of, or consist of finely divided inorganic solid materials such as silica, fumed silica, diatomaceous earth, calcium carbonate, calcium silicate, aluminum silicate, kaolin, talc, bentonite, clay and pulp.

Optionally, nonionic or anionic wax emulsions can be included in the coating(s), *i.e*., sealant layer(s), to improve blocking resistance and /or lower the coefficient of friction. For example, an emulsion of Michem Lube 215, Michem Lube 160 may be included in the sealant layer(s). Any conventional wax, such as, but not limited to Carnauba^{™} wax (commercially available from Michelman Corporation of Cincinnati, Ohio) that is useful in thermoplastic films is contemplated.

### Metallization

The outer surface (*i.e.,* side facing away from the core) of each sealant layer, *i.e.,* if the multilayer film has more than one sealant layer, may undergo metallization after optionally being treated. Metallization may be carried out through conventional methods, such as vacuum metallization by deposition of a metal layer such as aluminum, copper, silver, chromium, or mixtures thereof. Following metallization, a coating may be applied to the outer metallized layer "outside" or "inside" the vacuum chamber to result in the following structure: metallized layer/sealant layer/core/sealant layer/metallized layer. In an additional embodiment, a primer may be applied on the metal surface(s) followed by top coating(s).

In certain embodiments, the metal for metallization is metal oxide, any other inorganic materials, or organically modified inorganic materials, which are capable of being vacuum deposited, electroplated or sputtered, such as, for example, SiOx, AlOx, SnOx, ZnOx, IrOx, wherein x = 1 or 2, organically modified ceramics "ormocer", etc. The thickness of the deposited layer(s) is typically in the range from 100 to 5,000 Angstrom or preferably from 300 to 3000 Angstrom.

### Surface Treatment

One or both of the outer surfaces of the multilayered films may be surface-treated to increase the surface energy to render the film receptive to metallization, coatings, printing inks, adhesives, and/or lamination. The surface treatment can be carried out according to one of the methods known in the art including corona discharge, flame, plasma, chemical treatment, or treatment by means of a polarized flame.

### Priming

An intermediate primer coating may be applied to multilayered films. In this case, the film may be first treated by one of the foregoing methods to provide increased active adhesive sites thereon and to the thus-treated film surface there may be subsequently applied a continuous coating of a primer material. Such primer materials are well known in the art and include, for example, epoxy, polyethylene imine) (PEI), and polyurethane materials. U.S. Pat. No. 3,753,769, U.S. Pat. No. 4,058,645 and U.S. Pat. No. 4,439,493, discloses the use and application of such primers. The primer provides an overall adhesively active surface for thorough and secure bonding with the subsequently applied coating composition and can be applied to the film by conventional solution coating means, for example, by roller application.

### Orienting

The films herein are also characterized as being biaxially oriented. The films can be made by any suitable technique known in the art, such as a tentered or blown process, LISIM^{™}, and others. Further, the working conditions, temperature settings, lines speeds, etc. will vary depending on the type and the size of the equipment used. Nonetheless, described generally here is one method of making the films described throughout this specification. In a particular embodiment, the films are formed and biaxially oriented using the tentered method. In the tentered process, line speeds of greater than 100 m/min to 400 m/min or more, and outputs of greater than 2000 kg/h to 4000 kg/h or more are achievable. In the tenter process, sheets/films of the various materials are melt blended and coextruded, such as through a 3, 4, 5, 7-layer die head, into the desired film structure. Extruders ranging in diameters from 100 mm to 300 or 400 mm, and length to diameter ratios ranging from 10/1 to 50/1 can be used to melt blend the molten layer materials, the melt streams then metered to the die having a die gap(s) within the range of from 0.5 or 1 to an upper limit of 3 or 4 or 5 or 6 mm. The extruded film is then cooled using air, water, or both. Typically, a single, large diameter roll partially submerged in a water bath, or two large chill rolls set at 20 or 30 to 40 or 50 or 60 or 70 °C are suitable cooling means. As the film is extruded, an air knife and edge pinning are used to provide intimate contact between the melt and chill roll.

Downstream of the first cooling step in this embodiment of the tentered process, the unoriented film is reheated to a temperature of from 80 to 100 or 120 or 150 °C, in one embodiment by any suitable means such as heated S-wrap rolls, and then passed between closely spaced differential speed rolls to achieve machine direction orientation. It is understood by those skilled in the art that this temperature range can vary depending upon the equipment, and in particular, upon the identity and composition of the components making up the film. Ideally, the temperature will be below that which will melt the film, but high enough to facilitate the machine direction orientation process. Such temperatures referred to herein refer to the film temperature itself. The film temperature can be measured by using, for example, infrared spectroscopy, the source aimed at the film as it is being processed; those skilled in the art will understand that for transparent films, measuring the actual film temperature will not be as precise. The heating means for the film line may be set at any appropriate level of heating, depending upon the instrument, to achieve the stated film temperatures.

The lengthened and thinned film is passed to the tenter section of the line for TD orientation. At this point, the edges of the sheet are grasped by mechanical clips on continuous chains and pulled into a long, precisely controlled hot air oven for a pre-heating step. The film temperatures range from 100 or 110 to 150 or 170 or 180 °C in the pre-heating step. Again, the temperature will be below that which will melt the film, but high enough to facilitate the step of transverse direction orientation. Next, the edges of the sheet are grasped by mechanical clips on continuous chains and pulled into a long, precisely controlled hot air oven for transverse stretching. As the tenter chains diverge a desired amount to stretch the film in the transverse direction, the process temperature is lowered by at least 2 °C but typically no more than 20 °C relative to the pre-heat temperature to maintain the film temperature so that it will not melt the film. After stretching to achieve transverse orientation in the film, the film is annealed at a temperature below the melting point, and the film is then cooled from 5 to 10 or 15 or 20 or 30 or 40 °C below the stretching temperature, and the clips are released prior to edge trim, optional coronal, printing and/or other treatment can then take place, followed by winding.

Thus, TD orientation is achieved by the steps of pre-heating the film having been machine oriented, followed by stretching and annealing it at a temperature below the melt point of the film, and then followed by a cooling step at yet a lower temperature. In one embodiment, the films described herein are formed by imparting a transverse orientation by a process of first pre-heating the film, followed by a decrease in the temperature of the process within the range of from 2 or 3 to 5 to 10 or 15 or 20 °C relative to the pre-heating temperature while performing transverse orientation of the film, followed by a lowering of the temperature within the range of from 5 °C to 10 or 15 or 20 or 30 or 40 °C relative to the melt point temperature, holding or slightly decreasing (more than 5%) the amount of stretch, to allow the film to anneal. The latter step imparts the low TD shrink characteristics of the films described herein. Thus, for example, where the pre-heat temperature is 120 °C, the stretch temperature may be 114 °C, and the cooling step may be 98 °C, or any temperature within the ranges disclosed. The steps are carried out for a sufficient time to affect the desired film properties as those skilled in the art will understand.

Thus, in certain embodiments the film(s) described herein are biaxially oriented with at least a 5 or 6 or 7 or 8-fold TD orientation and at least a 2 or 3 or 4-fold MD orientation. Being so formed, the at least three-layer (one core, two skin layers, 18-21 µm thickness) possess an ultimate tensile strength within the range of from 100 or 110 to 80 or 90 or 200 MPa in the TD in certain embodiments; and possess an ultimate tensile strength within the range of from 30 or 40 to 150 or 130 MPa in the MD in other embodiments. Further, the SCS films described herein possess an MD Elmendorf tear is greater than 10 or 15 g in certain embodiments, and the 25 TD Elmendorf tear is greater than 15 or 20 g in other embodiments.

### INDUSTRIAL APPLICABILITY

The disclosed multilayered films may be stand-alone films, laminates, or webs. Or, the multilayered films may be sealed, coated, metallized, and/or laminated to other film structures. The disclosed multilayered films may be prepared by any suitable methods comprising the steps of co-extruding a multilayered film according to the description and claims of this specification, orienting and preparing the film for intended use such as by coating, printing, slitting, or other converting methods.

For some applications, it may be desirable to laminate the multilayered films to other polymeric film or paper products for purposes such as package decor including printing and metallizing. These activities are typically performed by the ultimate end-users or film converters who process films for supply to the ultimate end-users.

The prepared multilayered film may be used as a flexible packaging film to package an article or good, such as a food item or other product. In some applications, the film may be formed into a pouch type of package, such as may be useful for packaging a beverage, liquid, granular, or dry-powder product.

### EXAMPLE EMBODIMENTS

Typically, cast or blown polyethylene sealant films are not metallized because metal does not adhere well enough to maintain integrity when laminated to a stiff web. However, disclosed is a new, thin BOPE multilayered film that withstands metallization and also provides good metal adhesion and metallized barrier properties.

The following BOPE transparent films have been produced on a biaxially oriented polypropylene ("BOPP") line:

### EXAMPLE 1

### flame treatment

| | |
|---|---|
| 1.0 µm | m-LLDPE₁ |
| 23 µm | m-LLDPE₁ |
| 1.0 µm | 50 % m-LLDPE₁ + 50 % m-LLDPE₂+ 10,000 ppm silicate 6 µm |

### EXAMPLE 2

### flame treatment

| | |
|---|---|
| 1.0 µm | 50 % m-LLDPE₁ + 50 % m-LLDPE₂ |
| 23 µm | m-LLDPE₁ |
| 1.0 µm | 50 % m-LLDPE₁ + 50 % m-LLDPE₂+ 10,000 ppm silicate 6 µm |

### EXAMPLE 3

### flame treatment

| | |
|---|---|
| 1.0 µm | 100 % maleic-anhydride-grafted polyethylene |
| 23 µm | m-LLDPE₁ |
| 1.0 µm | 50 % m-LLDPE₁ + 50 % m-LLDPE₂+ 10,000 ppm silicate 6 µm |

### EXAMPLE 4

### flame treatment

| | |
|---|---|
| 1.0 µm | 100 % Escor 5100 |
| 23 µm | 50 % m-LLDPE₁ + 50 % m-LLDPE₂+ 10,000 ppm silicate 6 µm |
| 1.0 µm | 50 % m-LLDPE₁ + 50 % m-LLDPE₂+ 10,000 ppm silicate 6 µm |

In these examples, metallocene LLDPEs ("m-LLDPE") were used, namely m-LLDPE₁ that had melt flow index of 1.9 g/10min, density of 0.927 g/cm³, and melting peak 127°C, and m-LLDPE₂ that had melt flow index of 3.8 g/10min, density of 0.913 g/cm³, and melting peak 113°C. Other types of LLDPEs may be used, whether formed under non-metallocene chemistry, e.g., employing lanthanides or actinides, or metallocene catalysis, that have a melt flow index from 1 through 3, a density of 0.915 through 0.930 g/cm³, and a melting peak of 115°C through 135°C. Notably, however, the LLDPE resin(s) used in the sealant layer(s) must have a melting peak lower than the LLDPE resin(s) used in the core layer; preferably, viscosity also follows this mandate.

In Example 3, a maleic-anhydride-grafted polyethylene was used that had a density of 0.91 g/cm³ and a melting peak of 118°C. In example, alternative embodiments, one or more grades of maleic-anhydride-grafted polyethylene, *i.e*., having densities within a range from 0.900 through 0.930 g/cm³, may be used alone or blended into one or more LLDPE-based resins.

In Example 4, Escor 5100 is shorthand ExxonMobil Escor 5100, which is an ethylene acrylic acid ("EAA") copolymer containing 11% acrylic acid, having a melt flow index of 8.5 g/10min, a density of 0.940 g/cm³, and a melting peak 95°C. In example, alternative embodiments, Escor 5100 may be substituted with other acrylic-acid ("AA") copolymers, such as Primacor 3002, which contains 8% AA copolymer with a melting peak 100°C that is available from Dow, and/or used in combination with ExxonMobil Escor 5100 and/or other acrylic-acid copolymer(s).

The BOPE examples were biaxially oriented as disclosed herein and in accordance with U.S. Patent No. 8,080,294.

In addition to being flame-treated after orienting the BOPE films, the examples were then plasma treated under vacuum in an 80:20 Ar-O₂ atmosphere on the flame-treated surface of the thin, dually sealed, BOPE films, which had the measured values reported in Table 1.

**Table 1**

| | **Example 1** | **Example 2** | **Example 3** | **Example 4** |
|---|---|---|---|---|
| Optical Density (AIMCAL TP-101-78 standard) | 2.1 | 2.1 | 2.1 | 2.5 |
| Water Vapor Transmission Rate at 38°C / 90% RH in g/m²/day (ASTM F1249 standard) | 0.9 | 1.5 | 0.3 | 0.1 |
| Oxygen Transmission Rate at 23°C / 0 % RH in cm³/m²/day (ASTM D3895 standard) | > 200 | > 200 | 75 | 22 |

As the values reveal, when the sealant layer contains maleic-anhydride-grafted polyethylene or ethylene acrylic acid copolymer, then good barrier properties, *i.e*., low WVTR and OTR values, result.

The method for determining the steady-state rate of transmission of oxygen gas through the film samples is in accordance with ASTM D-3985. The unit used is cm³/m²/day at a pressure of 760 mmHg. Analyses were carried out at barometric pressure. Then, pressure compensation is performed on the data by computer in order to standardize data to 760 mmHg (sea level). As most of materials are heterogeneous and their barrier layers can be very thin versus the total thickness, the thickness is not measured. This means that the transmission rate is provided for the material structure as it is. The barrier side is oriented facing to the carrier gas. No special conditioning prior testing. Samples are not placed in the desiccator. The conditioning time is the time between the samples insertion in the diffusion cells and the beginning of the measuring cycle. The total conditioning time is the time between the samples insertion in the diffusion cells and the end of the test, *i.e.,* the total elapsed time. The standard testing conditions are 23 degrees Celsius and dry oxygen gas, *i.e.,* 0% relative humidity (RH).

The method for determining the rate of transmission of water vapor transmission through the film samples is in accordance with ASTM F-1249. The unit used is g/m².day. The barrier side is oriented facing to the carrier gas. No special conditioning prior testing. Samples are not placed in the desiccator. As most of materials are heterogeneous and their barrier layers can be very thin versus the total thickness, the overall structure thickness is not measured. This means that the water vapor transmission rate (WVTR) is provided for the material structure as it is. The conditioning time set on the instrument is the time elapsed between the samples insertion in the diffusion cells and the beginning of the first measuring cycle. During this period, the carrier gas does not go through the water vapor sensor, and so the WVTR is not measured. The total conditioning time is the total elapsed time, *i.e.,* the time between the samples insertion in the diffusion cells and the end of the test. The test conditions are 37.8°C and real 90% RH.

Further experiments transpired that included laminating the metallized side of the example BOPE films to 12µm polyester ("PET") films using a two-component, polyurethane-based adhesive. The adhesive bond strength of the laminates are shown in the Table 2. Adhesive bond strength may be measured by cutting a one inch wide strip from a laminate structures and peeling the primary web and the secondary web apart at 12 inches/min. and 90-degrees' peel angle on an Instron tensile tester (commercially available Instron Worldwide Headquarters, Norwood, Mass.). The bond strength is the maximum peel force measured by the test.

**Table 2**

| | **Example 1** | **Example 2** | **Example 3** | **Example 4** |
|---|---|---|---|---|
| Adhesive Bond Strength | 400 g/inch (157 g/cm) (metal transfer began) | 240 g/inch (94 g/cm) (metal transfer began) | 170 g/inch (67 g/cm) (metal transfer began) | film tore (very strong adhesion!) |

As the values reveal, when the sealant layer contains ethylene acrylic acid copolymer, then the laminated BOPE film exhibits excellent metal adhesion, *i.e.,* the film tore without metal transfer to the PET-based substrate. Comparatively, however, when the sealant layer contains maleic-anhydride-grafted polyethylene, the results were not as favorable, *i.e.,* metal transfer from the metallized layer to the PET-based substrate at 170 g/inch (67g/cm).

Sealing values of the foregoing, laminated, BOPE films were measured using an Otto Brugger sealer having crimp jaws under a dwell time 0.75 s and pressure of 41 N/cm² at ten-degree intervals from 100°C to 150°C, and are shown in Table 3.

**Table 3**

| | **Sealing Temperature** | | | | | |
|---|---|---|---|---|---|---|
| | 100°C | 110°C | 120°C | 130°C | 140°C | 150°C |
| MET-PET Example 1 g/inch (g/cm) | 585 (230) | 1680 (661) | 1515 (596) | 2255 (887) | 1925 (758) | 2160 (826) |
| MET-PET Example 2 g/inch (g/cm) | 250 (98) | 1990 (783) | 1540 (606) | 2410 (948) | 3760 (1480) | 3290 (1295) |
| MET-PET Example 3 g/inch (g/cm) | 125 (49) | 1260 (496) | 1570 (618) | 1860 (731) | 2465 (970) | 2065 (813) |
| MET-PET Example 4 g/inch (g/cm) | 0 (0) | 105 (41) | 905 (356) | 2935 (1155) | 3340 (1314) | 4390 (1728) |

The biaxially oriented, LLDPE film having an ethylene-acrylic-acid-copolymer-containing sealant layer that is metallized and PET-laminated shows a high seal-strength of 4390 g/inch (1728 g/cm). The other examples show lower seal strengths due to weaker bonding of the metal on the LLDPE film; that is, as previously discussed at adhesion bond strength, transfer occurs from the sealant BOPE metallized web onto the PET web during seal opening.

Additional improvements were realized in the MET-PET Example 4 embodiment through the addition of silicone gum in the sealant layer to decrease the coefficient of friction of the sealant side without sacrificing metallized barrier and metal adhesion strengths. Silicone gum masterbatches may be added at up to 5% to decrease the coefficient from 0.40 (without silicone gum) to 0.30. Example silicone masterbatches that may be used are Dow Corning 50-313, Dow Corning HMB-1103, and Constab SL05093LD.

## Claims

1. A film comprising:
a core layer consisting of biaxially oriented linear low-density polyethylene and optionally additives, wherein the core layer has a first side and a second side;
a first sealant layer consisting of biaxially oriented linear low-density polyethylene, and
optionally additives, on the first side; and
a second sealant layer consisting of biaxially oriented linear low-density polyethylene, and optionally additives, on the second side,
wherein the film is 30 µm or less in thickness, has a water-vapor transmission rate of ≤ 1 g/m²/d at 38°C and 90% relative humidity, and has an oxygen transmission rate of ≤ 100 cm³/m²/d at 23°C and 0% relative humidity, and wherein the linear low-density
polyethylene in the core layer, the first sealant layer, the second sealant layer, or combinations thereof is one or more grades of maleic-anhydride-grafted polyethylenes, acrylic-acid copolymers, or combinations thereof.

2. The film of claim 1, wherein ≤ 5 wt. % of silicone gum is an additive present in the first sealant layer, the second sealant layer, or both.

3. The film of claim 1, wherein the film further comprises one or more tie layers, wherein each of the one or more tie layers is between the core layer and either the first sealant layer or the second sealant layer.

4. The film of claim 1, wherein the first sealant layer, the second sealant layer, or both are metallized.

5. The film of claim 1, wherein the film further comprises one or more primers.

6. The film of claim 1, wherein the densities of the biaxially oriented linear low-density polyethylene in the core layer, the first sealant layer, the second sealant layer, or combinations thereof are same or different.

7. The film of claim 1, wherein the linear low-density polyethylene in the first sealant layer, the second sealant layer, or both each have a melting peak lower than a melting peak of the linear low-density polyethylene in the core layer.

8. The film of claim 1, wherein the linear low-density polyethylene in the first sealant layer and the second sealant layer each have a viscosity lower than a viscosity of the linear low-density polyethylene in the core layer.

9. The film of claim 1, wherein density of the linear low-density polyethylene in the core layer, the first sealant layer, the second sealant layer, or combinations thereof is within a range from 0.90 ≤ 0.93 g/cm³.

10. The film of claim 1, wherein the linear low-density polyethylene in the film comprises at least two polyethylenes in the core layer, the first sealant layer, the second sealant layer or combinations thereof with melt flow indices from 1 through 3, densities from 0.915 g/cm³ through 0.930 g/cm³, and melting peaks from 115°C through 135°C.

11. The film of claim 1, wherein the first sealant layer, the second sealant layer or both are treated at least once.

12. The film of claim 1, wherein adhesive bond strength of a metallized first sealant layer or a metallized second sealant layer, when laminated to 12 µm polyester film, is at least 67 g/cm.

13. The film of claim 1, wherein seal strength of a metallized first sealant layer or a metallized second sealant layer, when laminated to 12 µm polyester film, is at least 708 g/cm at 130°C under a dwell time of 0.75 s and pressure of 41 N/cm².

14. The film of claim 1, wherein seal strength of a metallized first sealant layer or a metallized second sealant layer, when laminated to 12 µm polyester film, is at least 945 g/cm at 140°C under a dwell time of 0.75 s and pressure of 41 N/cm².

15. Use of the film of claim l in a packaging, tagging, bagging, or labeling application.

## Patentansprüche

1. Folie, umfassend:
eine Kernschicht, bestehend aus biaxial orientiertem linearem Polyethylen von geringer Dichte und gegebenenfalls Additiven, wobei die Kernschicht eine erste Seite und eine zweite Seite aufweist;
eine erste Dichtmittelschicht, bestehend aus biaxial orientiertem linearem Polyethylen von geringer Dichte und gegebenenfalls Additiven, auf der ersten Seite; und
eine zweite Dichtmittelschicht, bestehend aus biaxial orientiertem linearem Polyethylen von geringer Dichte und gegebenenfalls Additiven, auf der zweiten Seite,
wobei die Folie 30 µm oder weniger dick ist, eine Wasserdampftransmissionsrate von ≤ 1 g/m²/d bei 38 °C und 90 % relativer Feuchte aufweist und eine Sauerstofftransmissionsrate von ≤ 100 cm³/m²/d bei 23 °C und 0 % relativer Feuchte aufweist, und wobei das lineare Polyethylen von geringer Dichte in der Kernschicht, der ersten Dichtmittelschicht, der zweiten Dichtmittelschicht oder Kombinationen davon eine oder mehrere Güten von mit Maleinsäureanhydrid gepfropften Polyethylenen, Acrylsäure-Copolymeren oder Kombinationen davon ist.

2. Folie nach Anspruch 1, wobei ≤ 5 Gew.-% Silikongummi ein Additiv sind, das in der ersten Dichtmittelschicht, der zweiten Dichtmittelschicht oder beiden vorhanden ist.

3. Folie nach Anspruch 1, wobei die Folie ferner eine oder mehrere Haftvermittlerschichten umfasst, wobei sich jede der einen oder mehreren Haftvermittlerschichten zwischen der Kernschicht und entweder der ersten Dichtmittelschicht oder der zweiten Dichtmittelschicht befindet.

4. Folie nach Anspruch 1, wobei die erste Dichtmittelschicht, die zweite Dichtmittelschicht oder beide metallisiert sind.

5. Folie nach Anspruch 1, wobei die Folie ferner eine oder mehrere Grundierungen umfasst.

6. Folie nach Anspruch 1, wobei die Dichten des biaxial orientierten linearen Polyethylens von geringer Dichte in der Kernschicht, der ersten Dichtmittelschicht, der zweiten Dichtmittelschicht oder Kombinationen davon gleich oder verschieden sind.

7. Folie nach Anspruch 1, wobei das lineare Polyethylen von geringer Dichte in der ersten Dichtmittelschicht, der zweiten Dichtmittelschicht oder beiden jeweils einen Schmelzpeak aufweisen, der niedriger als ein Schmelzpeak des linearen Polyethylens von geringer Dichte in der Kernschicht ist.

8. Folie nach Anspruch 1, wobei das lineare Polyethylen von geringer Dichte in der ersten Dichtmittelschicht und der zweiten Dichtmittelschicht jeweils eine Viskosität aufweisen, die niedriger als eine Viskosität des linearen Polyethylens von geringer Dichte in der Kernschicht ist.

9. Folie nach Anspruch 1, wobei die Dichte des linearen Polyethylens von geringer Dichte in der Kernschicht, der ersten Dichtmittelschicht, der zweiten Dichtmittelschicht oder Kombinationen davon im Bereich von 0,90≤0,93 g/cm³ liegt.

10. Folie nach Anspruch 1, wobei das lineare Polyethylen von geringer Dichte in der Folie mindestens zwei Polyethylene in der Kernschicht, der ersten Dichtmittelschicht, der zweiten Dichtmittelschicht oder Kombinationen davon mit Schmelzflussindizes von 1 bis 3, Dichten von 0,915 g/cm³ bis 0,930 g/cm³ und Schmelzpeaks von 115 °C bis 135 °C umfasst.

11. Folie nach Anspruch 1, wobei die erste Dichtmittelschicht, die zweite Dichtmittelschicht oder beide mindestens einmal behandelt sind.

12. Folie nach Anspruch 1, wobei die Klebebindungsfestigkeit einer metallisierten ersten Dichtmittelschicht oder einer metallisierten zweiten Dichtmittelschicht bei Laminierung auf 12 µm Polyesterfolie mindestens 67 g/cm beträgt.

13. Folie nach Anspruch 1, wobei die Dichtungsfestigkeit einer metallisierten ersten Dichtmittelschicht oder einer metallisierten zweiten Dichtmittelschicht bei Laminierung auf 12 µm Polyesterfolie mindestens 708 g/cm bei 130 °C bei einer Verweilzeit von 0,75 s und einem Druck von 41 N/cm² beträgt.

14. Folie nach Anspruch 1, wobei die Dichtungsfestigkeit einer metallisierten ersten Dichtmittelschicht oder einer metallisierten zweiten Dichtmittelschicht bei Laminierung auf 12 µm Polyesterfolie mindestens 945 g/cm bei 140 °C bei einer Verweilzeit von 0,75 s und einem Druck von 41 N/cm² beträgt.

15. Verwendung der Folie nach Anspruch 1 in einer Verpackungs-, Markierungs-, Absack- oder Etikettierungsanwendung.

## Revendications

1. Film comprenant :
une couche centrale constituée de polyéthylène basse densité linéaire orienté biaxialement et éventuellement d'additifs, la couche centrale ayant un premier côté et un deuxième côté ;
une première couche d'étanchéité constituée de polyéthylène basse densité linéaire orienté biaxialement, et éventuellement d'additifs, sur le premier côté ; et
une deuxième couche d'étanchéité constituée de polyéthylène basse densité linéaire orienté biaxialement, et éventuellement d'additifs, sur le deuxième côté,
le film ayant une épaisseur inférieure ou égale à 30 µm, ayant un taux de transmission de vapeur d'eau ≤ 1 g/m²/j à 38 °C et 90 % d'humidité relative, et ayant un taux de transmission d'oxygène ≤ 100 cm³/m²/j à 23 °C et 0 % d'humidité relative, et dans lequel le polyéthylène linéaire basse densité dans la couche centrale, la première couche d'étanchéité, la deuxième couche d'étanchéité ou des combinaisons de celles-ci est une ou plusieurs qualités de polyéthylènes greffés par l'anhydride maléique, de copolymères acrylique-acide, ou des combinaisons de ceux-ci.

2. Film selon la revendication 1, dans lequel ≤ 5 % en poids de gomme de silicone est un additif présent dans la première couche d'étanchéité, la deuxième couche d'étanchéité ou les deux.

3. Film selon la revendication 1, le film comprenant en outre une ou plusieurs couches de liaison, chacune des une ou plusieurs couches de liaison étant située entre la couche centrale et soit la première couche d'étanchéité ou la deuxième couche d'étanchéité.

4. Film selon la revendication 1, dans lequel la première couche d'étanchéité, la deuxième couche d'étanchéité ou les deux sont métallisées.

5. Film selon la revendication 1, le film comprenant en outre une ou plusieurs couches primaires.

6. Film selon la revendication 1, dans lequel les masses volumiques du polyéthylène basse densité linéaire orienté biaxialement dans la couche centrale, la première couche d'étanchéité, la deuxième couche d'étanchéité ou des combinaisons de celles-ci sont identiques ou différentes.

7. Film selon la revendication 1, dans lequel le polyéthylène linéaire basse densité dans la première couche d'étanchéité, la deuxième couche d'étanchéité ou les deux ont chacun un pic de fusion inférieur à un pic de fusion du polyéthylène linéaire basse densité dans la couche centrale.

8. Film selon la revendication 1, dans lequel le polyéthylène linéaire basse densité dans la première couche d'étanchéité et la deuxième couche d'étanchéité ont chacune une viscosité inférieure à une viscosité du polyéthylène linéaire basse densité dans la couche centrale.

9. Film selon la revendication 1, dans lequel la masse volumique du polyéthylène basse densité linéaire dans la couche centrale, la première couche d'étanchéité, la deuxième couche d'étanchéité ou des combinaisons de celles-ci est comprise dans une plage de 0,90 ≤ 0,93 g/cm³.

10. Film selon la revendication 1, dans lequel le polyéthylène linéaire basse densité dans le film comprend au moins deux polyéthylènes dans la couche centrale, la première couche d'étanchéité, la seconde couche d'étanchéité ou des combinaisons de celles-ci avec des indices de fluage de 1 à 3, des masses volumiques de 0,915 g/cm³ à 0,930 g/cm³et des pics de fusion de 115 °C à 135 °C.

11. Film selon la revendication 1, dans lequel la première couche d'étanchéité, la deuxième couche d'étanchéité ou les deux sont traitées au moins une fois.

12. Film selon la revendication 1, dans lequel la résistance d'adhésion d'une première couche d'étanchéité métallisée ou d'une deuxième couche d'étanchéité métallisée, lorsqu'elle est stratifiée sur un film de polyester de 12 µm, est d'au moins 67 g/cm.

13. Film selon la revendication 1, dans lequel la résistance de scellement d'une première couche d'étanchéité métallisée ou d'une deuxième couche d'étanchéité métallisée, lorsqu'elle est stratifiée sur un film de polyester de 12 µm, est d'au moins 708 g/cm à 130 °C avec un temps de séjour de 0,75 s et une pression de 41 N/cm².

14. Film selon la revendication 1, dans lequel la résistance de scellement d'une première couche d'étanchéité métallisée ou d'une deuxième couche d'étanchéité métallisée, lorsqu'elle est stratifiée sur un film de polyester de 12 µm, est d'au moins 945 g/cm à 140 °C avec un temps de séjour de 0,75 s et une pression de 41 N/cm².

15. Utilisation du film selon la revendication 1 dans une application d'emballage, d'étiquetage, d'ensachage ou d'étiquetage.
